# EUROPEAN PATENT APPLICATION

(11) **EP 3 603 993 A1**
(43) Date of publication of application: **05.02.2020**
(21) Application number: 18778246.1
(22) Date of filing: 19.03.2018
(51) Int. Cl.: B60C 13/00, B60C 9/08

(54) **TIRE**

(30) Priority: 30.03.2017 JP 2017068373
(71) Applicant: Bridgestone Corporation, Tokyo 104-8340 (JP)
(72) Inventor: YAMAZAKI, Shinichiro, Tokyo 104-8340 (JP); SHIBATA, Yasuo, Tokyo 104-8340 (JP)
(74) Representative: Oxley, Robin John George
(86) International application number: PCT/JP2018/010758
(87) International publication number: WO 2018/180683

(57) **Abstract**

A protrusion portion (110) of a pneumatic tire is located between a maximum width position (Wmax) of the tire and an extension line (L1') of an inner side belt (50a) in a tire radial direction. The pneumatic tire includes an inflection point (P) where a direction of bending deformation is changed when a load is applied to the tire. The inflection point (P) is located between the maximum width position (Wmax) and the extension line (L1'). The protrusion portion (110) is protruded toward an outer side in a tire width direction more than a surface of a side wall at the maximum width position (Wmax) and the protrusion portion (110) includes a maximum protruded portion (110p). The maximum protruded portion (110p) is arranged at a position corresponding to the inflection point (P) in the tire radial direction.

## Description

### [Technical Field]

The present invention relates to a tire having a protrusion portion protruded from a surface of a side wall toward an outer side in a tire width direction.

### [Background Art]

Conventionally, a structure of a tire for trucks or buses that has a protrusion portion on a surface of a side wall in order to prevent damage of a tire side portion, specifically a surface of the side wall, caused by contacting a curbstone of a sidewalk, has been known.

For example, Patent Literature 1 discloses a tire for trucks or buses having a wing-like protrusion portion protruded, which is toward an outer side in a tire width direction, on a surface of a side wall closer to a tread. The tire for trucks or buses is presupposed to be re-treaded (cold re-treaded) by using a vulcanized rubber sheet for a tread. Its object is to prevent the damage of a tire side portion of a base tire, which is to be extended in its lifetime by the re-treading forming the wing-like protrusion portion, so as to improve durability of the tire.

### [Citation List]

### [Patent Literature]

[PTL 1] Japanese Unexamined Patent Application Publication No. 2005-112010

### [Summary of Invention]

In recent years, it is desired to improve so-called precision docking of a route bus that repeatedly stops at bus stops. The precision docking denotes a degree of a distance and a degree of a level difference between a sidewalk and a doorway when the bus stops at a bus stop. The getting on/off performance is enhanced by improving the precision docking.

However, when the precision docking is improved, the surface of the side wall of the tire is rubbed with a curbstone of the sidewalk and the tire side portion is severely worn, and as a result, the failure of the tire might be caused.

It is accordingly considered to form the protrusion portion described above on the tire side portion, however in a case in which the protrusion portion is merely formed, rubber volume is increased and therefore rolling resistance and weight are increased. Especially, in recent years, the increase of the rolling resistance and the weight should be avoided as much as possible due to a desire to improve an environmental performance.

Accordingly, an object of the present invention is, in consideration of the problem described above, to provide a tire capable of preventing failure caused by wear of a tire side portion while suppressing an increase of rolling resistance and weight.

One aspect of the present invention is a tire (pneumatic tire 10) including a belt layer (belt layer 50) formed by a plurality of crossing belts, and a protrusion portion (for example, protrusion portion 110) protruded from a surface of a side wall (side wall 100a) toward an outer side in a tire width direction. The protrusion portion is located between a maximum width position (maximum width position Wmax) of the tire and an extension line (extension line L1') of an inner side belt (inner side belt 50a), which is arranged at an innermost side in a tire radial direction among the belts, in the tire radial direction in a sectional view of the tire along the tire width direction and the tire radial direction. The tire includes an inflection point (inflection point P) where a direction of bending deformation is changed when a load is applied to the tire. The inflection point is located between the maximum width position and the extension line. The protrusion portion is protruded toward the outer side in the tire width direction more than the surface of the side wall at the maximum width position and the protrusion portion includes a maximum protruded portion (maximum protruded portion 110p). The maximum protruded portion is arranged at a position corresponding to the inflection point in the tire radial direction.

### [Brief Description of Drawings]

[Fig. 1] Fig. 1 is a cross-sectional view along a tire width direction and a tire radial direction illustrating a part of a pneumatic tire 10.
[Fig. 2] Fig. 2 is an enlarged cross-sectional view illustrating a part of a tire side portion 100.
[Fig. 3] Fig. 3 is a side view illustrating a part of the pneumatic tire 10.
[Fig. 4] Fig. 4 is a schematic view illustrating a sectional shape of the pneumatic tire 10 to which a standard load is applied.
[Fig. 5] Fig. 5(a) and Fig. 5(b) are schematic views illustrating the sectional shapes of the pneumatic tire 10 before and after deformed by the standard load applied to the pneumatic tire 10.
[Fig. 6] Fig. 6 is a schematic view illustrating the pneumatic tire 10, which is mounted to a vehicle, contacting a curbstone 300.
[Fig. 7] Fig. 7 is an enlarged cross-sectional view illustrating a part of the tire side portion 100 in which a protrusion portion 110A (first modified example) is formed.
[Fig. 8] Fig. 8 is an enlarged cross-sectional view illustrating a part of the tire side portion 100 in which a protrusion portion 110B (second modified example) is formed.
[Fig. 9] Fig. 9 is an enlarged cross-sectional view illustrating a part of the tire side portion 100 in which a protrusion portion 110C (third modified example) is formed.
[Fig. 10] Fig. 10 is a side view illustrating a part of the pneumatic tire 10 in which a protrusion portion 110D (fourth modified example) is formed.
[Fig. 11] Fig. 11 is a side view illustrating a part of the pneumatic tire 10 in which a protrusion portion 110E (fifth modified example) is formed.

### [Description of Embodiments]

Hereinafter, an embodiment of the present invention will be described with reference to the drawings. The same reference signs or similar reference signs are assigned to the same functions or the same components and the description thereof is omitted as needed.

### (1) Schematic configuration of tire

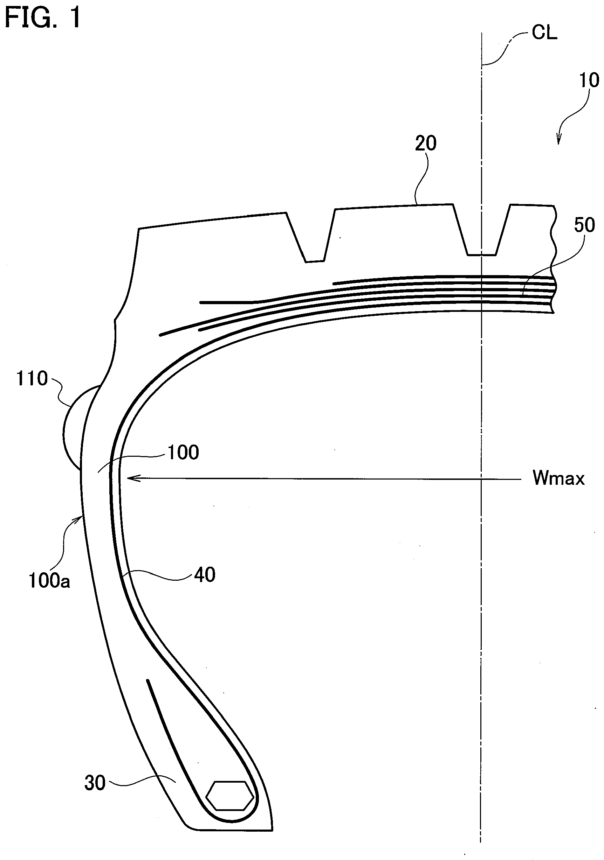

Fig. 1 is a cross-sectional view along a tire width direction and a tire radial direction illustrating a part of a pneumatic tire 10. Fig. 1 shows one side of the tire with respect to a tire equatorial line CL. In Fig. 1, an illustration of hatching indicating a section is omitted (hereinafter the same).

The pneumatic tire 10 is formed as a radial tire for trucks or buses (heavy load pneumatic tire), especially formed as a tire mounted to a route bus that repeatedly stops at bus stops. A size of the pneumatic tire 10 is not especially limited, however examples of a general size of the tire used for the route bus include 275/70R22.5, 245/70R19.5 and 205/80R17.5.

The pneumatic tire 10 is provided with a tread portion 20 that contacts a road surface, and a bead portion 30 mounted to a wheel rim (not shown). Further, the pneumatic tire 10 is provided with a tire side portion 100 formed between the tread portion 20 and the bead portion 30.

Further, in the tread portion 20, a pattern (tread pattern) suitable to a property of a vehicle (bus) to which the pneumatic tire 10 is mounted (for example, a mainly low speed travelling vehicle or a mainly high speed travelling vehicle) and performance of the pneumatic tire 10 to be required (for example, low rolling resistance or wear resistance) is formed.

A carcass ply 40 and a belt layer 50 are formed at an inner side in a tire radial direction of the tread portion 20. The carcass ply 40 forms a frame of the pneumatic tire 10 and is folded by a pair of the bead portions 30 toward an outer side in a tire width direction.

The belt layer 50 includes a plurality (for example, two) of crossing belts in which tire cords therein are oriented in different directions to each other. Further, the belt layer 50 may further include a belt for reinforcing the pneumatic tire 10.

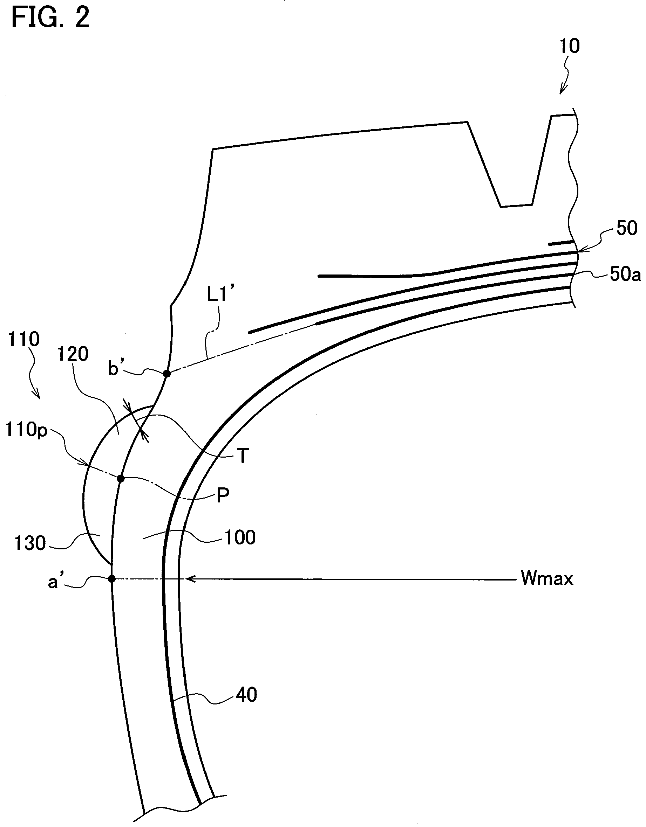

The belt layer 50 includes an inner side belt 50a (not shown in Fig. 1, see Fig. 2) arranged at the innermost side in the tire radial direction, namely arranged adjacent to the carcass ply 40.

A protrusion portion 110 is formed on the tire side portion 100. The protrusion portion 110 is formed on a surface of a side wall 100a that forms an outer side wall surface of the tire side portion 100. The protrusion portion 110 is protruded from the surface of the side wall 100a toward an outer side in the tire width direction.

The protrusion portion 110 contacts a curbstone first when the vehicle stops at a bus stop.

### (2) Shape of protrusion portion

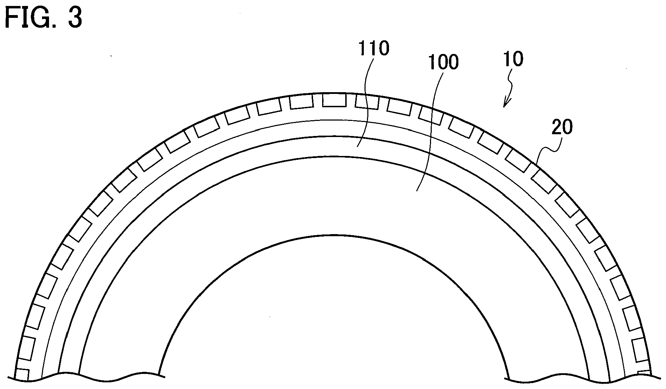

Fig. 2 is an enlarged cross-sectional view illustrating a part of the tire side portion 100. Fig. 3 is a side view illustrating a part of the pneumatic tire 10.

As shown in Fig. 2 and Fig. 3, the protrusion portion 110 is formed in a hemispherical shape in a section along the tire width direction and the tire radial direction so as to be protruded from the surface of the side wall 100a.

The protrusion portion 110 is located between a maximum width position Wmax and an extension line of the inner side belt 50a, which is arranged at the innermost side in the tire radial direction among the belts, in the tire radial direction.

As shown in Fig. 2, a point a' is defined as an intersection between a straight line passing the maximum width position Wmax to be parallel to the tire width direction and the surface of the side wall 100a, and a point b' is defined as an intersection between an extension line L1' of the inner side belt 50a and the surface of the side wall 100a. That is, the protrusion portion 110 is located between the point a' and the point b'.

Here, the extension line L1' of the inner side belt 50a is a line extended along an extension direction of the inner side belt 50a in the tire width direction, and is not always a straight line.

The pneumatic tire 10, specifically the tire side portion 100, has an inflection point P where a direction of bending deformation is changed when a load, preferably a standard load, is applied to the pneumatic tire 10. More specifically, the inflection point P is located between the maximum width position Wmax and the extension line L1', in the tire radial direction. The inflection point P is further described below.

The standard load denotes a maximum load (maximum load capacity) in its tire size, defined in the standards such as JATMA (or TRA and ETRTO).

The protrusion portion 110 is protruded toward an outer side in the tire width direction more than the surface of the side wall 100a at the maximum width position Wmax. Further, the protrusion portion 110 includes a maximum protruded portion 110p.

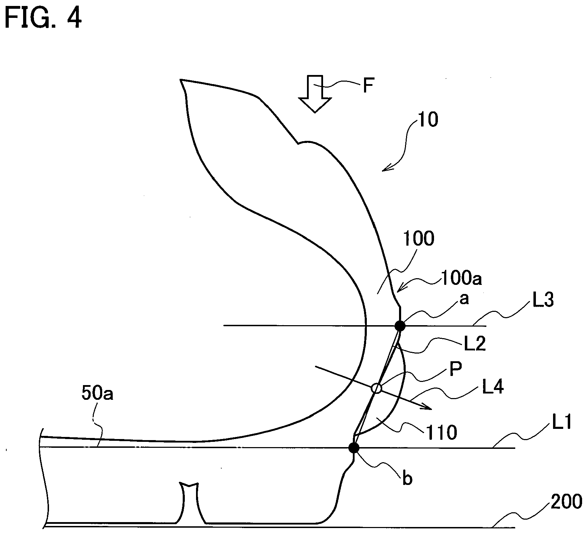

As described below, the maximum protruded portion 110p is protruded the most in a direction of a straight line L4 (see Fig. 4) when the standard load is applied to the pneumatic tire 10. Here, the maximum protruded portion 110p is different from a maximum protruded portion of the pneumatic tire 10 to which a load is not applied.

The maximum protruded portion 110p is arranged at a position corresponding to the inflection point P in the tire radial direction. A relationship between the maximum protruded portion 110p and the inflection point P is further described below.

The protrusion portion 110 includes an outer side portion 120 (radial direction outer side portion) located at the outer side in the tire radial direction with respect to the inflection point P, and an inner side portion 130 (radial direction inner side portion) located at the inner side in the tire radial direction with respect to the inflection point P.

As shown in Fig. 2, the inner side portion 130 is larger than the outer side portion 120. Specifically, when the protrusion portion 110 is divided into the inner side portion 130 and the outer side portion 120 by the straight line L4 (see Fig. 4), a cross section of the inner side portion 130 along the tire width direction and the tire radial direction is larger than a cross section of the outer side portion 120.

Further, as described above, the protrusion portion 110 is formed in a hemispherical shape. Thus, a thickness T of the protrusion portion 110 becomes smaller as being far away from the maximum protruded portion 110p in the tire radial direction. Here, the thickness T denotes a distance between the surface of the side wall 100a without the protrusion portion 110 and an outer surface of the protrusion portion 110.

### (3) Shape of pneumatic tire 10 to which standard load is applied

Fig. 4 is a schematic view illustrating a sectional shape of the pneumatic tire 10 to which the standard load is applied. Specifically, Fig. 4 schematically shows a state of the tire side portion of the pneumatic tire 10, contacts the road surface 200, deformed by a standard load F applied to the pneumatic tire 10.

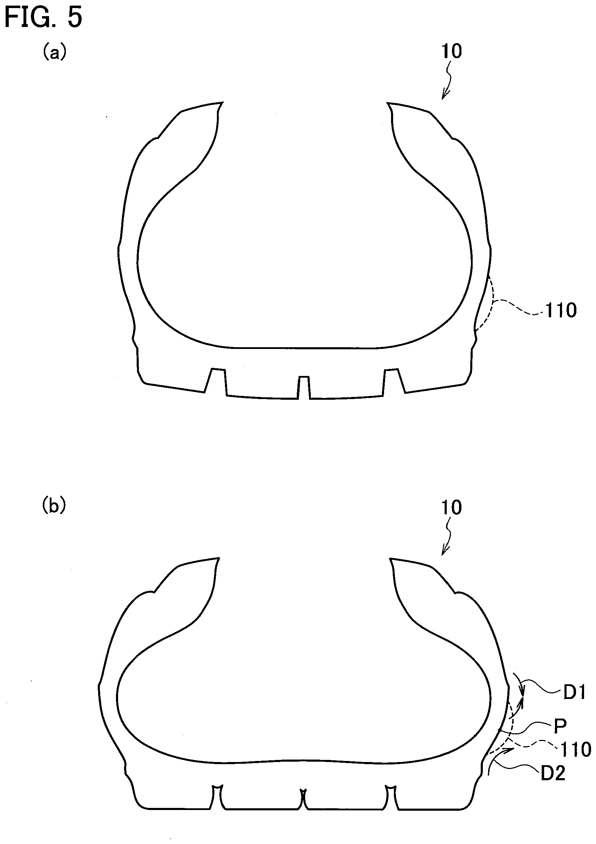

Further, Fig. 5(a) and Fig. 5(b) are schematic views illustrating the sectional shapes of the pneumatic tire 10 before and after deformed by the standard load applied to the pneumatic tire 10. Specifically, Fig. 5(a) shows a sectional shape of the pneumatic tire 10 before deformed, and Fig. 5(b) shows a sectional shape of the pneumatic tire 10 after deformed. That is, Fig. 5(b) shows the same shape as Fig. 4.

As shown in Fig. 4, the protrusion portion 110 is arranged between a straight line L3 passing a point a and parallel to the tire width direction and a straight line L1 passing a point b and parallel to the tire width direction.

The point a and the point b correspond to the point a' and the point b' shown in Fig. 2, respectively. However, since the tire side portion 100 is deformed by the load F, the positional relations therebetween are different.

As shown in Fig. 4, in a sectional view along the tire width direction and the tire radial direction, the point a is defined as a position on the surface of the side wall 100a at the maximum width position Wmax. Further, the point b is defined as an intersection between the straight line L1 passing the inner side belt 50a and parallel to the tire width direction, and the surface of the side wall 100a.

Here, the point a and the point b are defined in a state in which the standard load (load F) is applied to the pneumatic tire 10.

The point a corresponds to the maximum width position Wmax of the tire side portion 100 and the deformation in a D1 direction (see Fig. 5(b)) is maximum.

The point b is located within a buttress region of the tire side portion 100 and the deformation in a D2 direction (see Fig. 5(b)) is maximum. Specifically, the point b is approximated by replacing an outer side end portion in the tire width direction of a rigid body of the tread portion 20, which restricts the deformation in the D2 direction and is defined by an end portion of the inner side belt 50a (innermost belt), with a position on the surface of the tire side portion 100 (or the buttress).

The inflection point P is an intersection of a straight line L2 passing the point a and the point b. The maximum protruded portion 110p is located on the straight line L4 passing the inflection point P and orthogonal to the straight line L2.

In the present embodiment, the inflection point P is approximately introduced, however the inflection point P may be described as below.

Specifically, the inflection point P is a position where a direction (D1 in Fig. 5(b)) of the bending deformation compressed in the tire radial direction is changed into a direction (D2 in Fig. 5(b)) of the bending deformation falling toward a side of the tread portion 20 that contacts the road surface 200, when the standard load is applied to the pneumatic tire 10.

### (4) Functions and effects

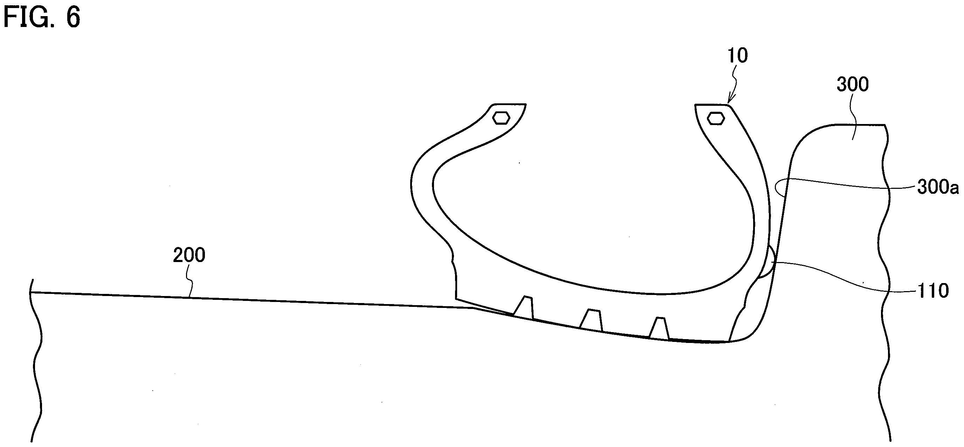

Next, effects of the pneumatic tire 10 in which the protrusion portion 110 is formed will be described. Fig. 6 is a schematic view illustrating the pneumatic tire 10, which is mounted to a vehicle (not shown), contacting a curbstone 300.

As shown in Fig. 6, when the vehicle travelling on the road surface 20 approaches the curbstone 300, the protrusion portion 110 of the pneumatic tire 10 contacts a side surface 300a of the curbstone 300 first. With this, wear of the tire side portion 100 (the surface of the side wall 100a) caused by being rubbed directly with the curbstone 300 and failure caused by the wear can be prevented.

In this way, the protrusion portion 110 is served as a sacrificial worn portion that is worn prior to other part.

Further, as described above, the maximum protruded portion 110p of the protrusion portion 110 is arranged at a position corresponding to the inflection point P. Specifically, the maximum protruded portion 110p is located on the straight line L4 passing the inflection point P and orthogonal the straight line L2.

When the load is applied to the pneumatic tire 10 and thereby the tire side portion 100 is deformed, the bending deformation falling toward the side of the tread portion 20 is caused at the side of the tread portion 20 with respect to the inflection point P, and the bending deformation compressed (pressed) in the tire radial direction is caused at the side of the maximum width position Wmax with respect to the inflection point P. That is, the deformation becomes small at the inflection point P, and thereby there is a region in which loss in strain energy to be generated becomes small.

That is, since the maximum protruded portion 110p is arranged at the position corresponding to the inflection point P, the deformation of the protrusion portion 110 is suppressed, and thereby an increase of the loss in the strain energy can be minimized.

With this, deterioration of the rolling resistance can be effectively suppressed even if the rubber volume is increased by forming the protrusion portion 110. Further, as a result of locally arranging the protrusion portion 110 near the inflection point P, the protrusion portion 110 can be minimized, and an increase in weight can be suppressed while preventing the wear of the tire side portion 100.

Conventionally, as a countermeasure against wear of the tire side portion 100, a measure that merely increases rubber volume of the tire side portion 100 contacting the curbstone 300 or an obstacle, and a measure that arranges rubber with high wear resistance have been widely adopted, however in such cases, the rolling resistance and the weight might be increased.

In the present embodiment, contrary to the conventional measures, by minimizing the increase of the loss in the strain energy by forming the protrusion portion 110, both of the prevention of the wear of the tire side portion 100 and the suppression of the increase of the rolling resistance and the weight can be achieved.

In the present embodiment, the cross section of the inner side portion 130 of the protrusion portion 110 is larger than the cross section of the outer side portion 120. Thus, the inner portion 130 having a large cross section and located at the inner side in the tire radial direction can contact the side surface 300a of the curbstone 300 easily, and thereby the tire side portion 100 can be securely protected from being worn.

In the present embodiment, the thickness T from the surface of the side wall 100a of the protrusion portion 110 becomes smaller as being far away from the maximum protruded portion 110p in the tire radial direction. Thus, the tire side portion 100 can be protected from being worn while minimizing the increase of the rubber volume of the protrusion portion 110.

### (5) Modified examples

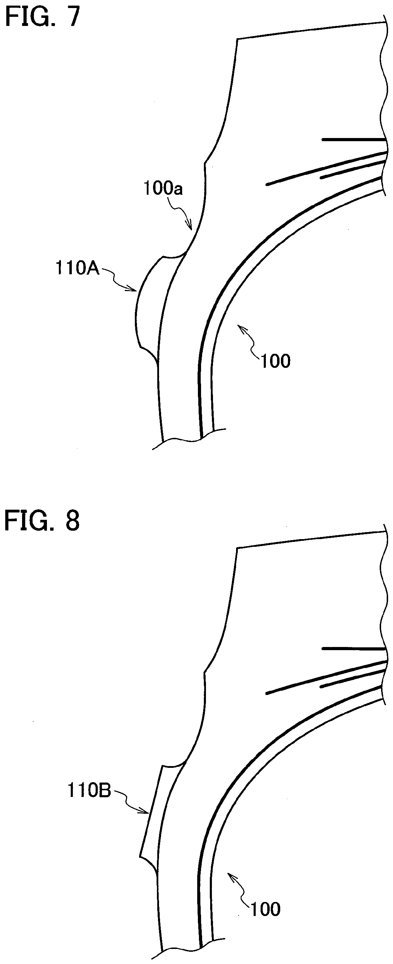

Next, modified examples of the protrusion portion 110 will be described. Specifically, the modified examples relating to a shape of the protrusion portion 110, and an arrangement of the protrusion portion 110 in the tire circumferential direction will be described with reference to Fig. 7 to Fig. 11.

### (5. 1) First to third modified examples

Firstly, modified examples relating to the sectional shape of the protrusion portion 110 will be described.

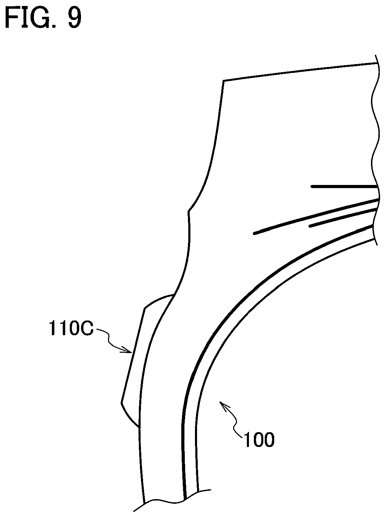

Fig. 7 is an enlarged cross-sectional view illustrating a part of the tire side portion 100 in which a protrusion portion 110A (first modified example) is formed. Fig. 8 is an enlarged cross-sectional view illustrating a part of the tire side portion 100 in which a protrusion portion 110B (second modified example) is formed. Fig. 9 is an enlarged cross-sectional view illustrating a part of the tire side portion 100 in which a protrusion portion 110C (third modified example) is formed.

Sectional shapes of an end portion at the inner side in the tire radial direction and an end portion at the outer side in the tire radial direction (proximal portion) of the protrusion portion 110A are different from those of the protrusion portion 110. Specifically, each of the end portions of the protrusion portion 110A is curved such that a level difference with the surface of the side wall 100a is less. With this, stress concentration in each of the end portions can be relaxed.

The protrusion portion 110B also has the end portion at the inner side in the tire radial direction and the end portion at the outer side in the tire radial direction similar to those of the protrusion portion 110A. On the other hand, a surface of the protrusion portion 110B at the outer side in the tire width direction is not formed in a hemispherical shape like the protrusion portion 100 but formed in a plane shape. With this, the protrusion portion 110B can be come into contact with the curbstone 300 at a wider region.

The protrusion portion 110C is formed such that a surface at the outer side in the tire width direction is formed in a plane shape, similar to the protrusion portion 110B. While, an end portion at the inner side in the tire radial direction and an end portion at the outer side in the tire radial direction (proximal portion) of the protrusion portion 110C are formed similar to those of the protrusion portion 110 (the end portions of the protrusion portion 110C is curved opposite to those of the protrusion portions 110A, 110B).

Here, the protrusion portion is not limited to each shape in the modified examples shown in Fig. 7 to Fig. 9, and therefore a shape of the surface having a hemispherical shape or a plane shape and a shape of the end portion (proximal portion) having a protruded shape or a recessed shape in a sectional view along the tire width direction and the tire radial direction may be appropriately combined.

### (5. 2) Fourth and fifth modified examples

Next, modified examples relating to the arrangement of the protrusion portion 110 in the tire circumferential direction will be described.

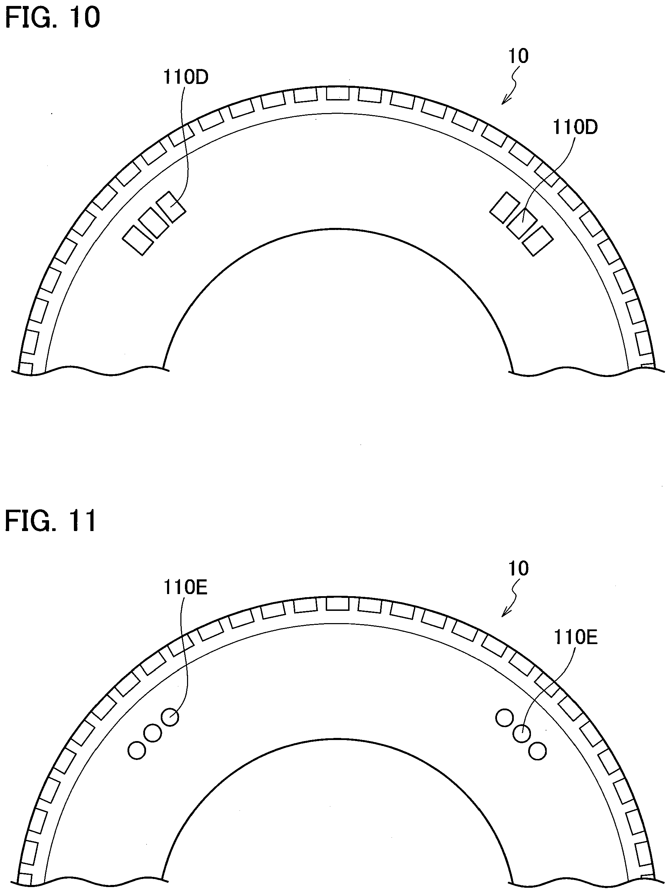

Fig. 10 is a side view illustrating a part of the pneumatic tire 10 in which a protrusion portion 110D (fourth modified example) is formed. Fig. 11 is a side view illustrating a part of the pneumatic tire 10 in which a protrusion portion 110E (fifth modified example) is formed.

As shown in Fig. 10 and Fig. 11, contrary to the protrusion portion 110, each of the protrusion portion 110D and the protrusion portion 110E is not continuously formed in the tire circumferential direction, and therefore each of the protrusion portion 110D and the protrusion portion 110E is formed in a certain region in the tire circumferential direction. With this, the increase in weight can be suppressed while preventing the tire side portion 100 from being worn.

Specifically, each of the protrusion portions 110D and the protrusion portions 110E are separately arranged in the tire circumferential direction, in a tire side view. Three of each of the protrusion portions 110D and the protrusion portions 110E are arranged to be adjacent to each other with predetermined intervals in the tire circumferential direction. The predetermined intervals may be or may not be set to regular intervals, however it is preferable to set the interval such that the surface of the side wall 100a does not contact the curbstone 300 directly.

The protrusion portion 110D is formed in a rectangular shape in the tire side view. While, the protrusion portion 110E is formed in a circular shape in the tire side view.

### (6) Other embodiments

As described above, the contents of the present invention are described with reference to the examples, however the present invention is not limited to those descriptions. It is obvious for a person skilled in the art to adopt various modifications and improvement.

For example, the protrusion portion 110 may be formed in only the tire side portion 100 at an outer side in a state in which the pneumatic tire 10 is mounted to the vehicle, or may be formed in both of the tire side portions 100. Actually, an appropriate configuration may be selected by considering a possibility of tire rotation of the pneumatic tires 10 (including a possibility of remounting of the tire to the rim wheel), an increase of weight caused by forming the protrusion portion 110, or the like.

Further, the protrusion portion 110 may be formed by replacing the tire side portion 100 worn or damaged (it is called re-side). The replacing of the tire side portion 100 can be performed by a precure method using a vulcanized rubber sheet, or a re-mold method using an unvulcanized rubber sheet. Or alternatively, a component for the replacement in which the protrusion portion 110 is formed (it is not limited to rubber but formed by synthetic resin), may be bonded.

As described above, the embodiments of the present invention are described, however the present invention is not limited to the description and the drawings forming a part of the present disclosure. Various modifications, examples, and operation techniques will be apparent from the present disclosure to a person skilled in the art.

### [Industrial Applicability]

The tire described above is useful to prevent failure caused by the wear of the tire side portion while suppressing the increase of the rolling resistance and the weight.

### [Reference Signs List]

10: pneumatic tire
20: tread portion
30: bead portion
40: carcass ply
40a: folded end
50: belt layer
100: tire side portion
100a: side wall
110, 110A to 110E: protrusion portion
110p: maximum protruded portion
120: outer side portion
130: inner side portion
200: road surface
300: curbstone
300a: side surface

## Claims

1. A tire comprising:
a belt layer formed by a plurality of belts; and
a protrusion portion protruded from a surface of a side wall toward an outer side in a tire width direction,
wherein the protrusion portion is located between a maximum width position of the tire and an extension line of an inner side belt, which is arranged at an innermost side in a tire radial direction among the belts, in the tire radial direction in a sectional view of the tire along the tire width direction and the tire radial direction,
wherein the tire includes an inflection point where a direction of bending deformation is changed when a load is applied to the tire,
wherein the inflection point is located between the maximum width position and the extension line,
wherein the protrusion portion is protruded toward the outer side in the tire width direction more than the surface of the side wall at the maximum width position and the protrusion portion includes a maximum protruded portion, and
wherein the maximum protruded portion is arranged at a position corresponding to the inflection point in the tire radial direction.

2. The tire according to claim 1, wherein the inflection point is a position where a direction of the bending deformation compressed in the tire radial direction is changed into a direction of the bending deformation falling toward a side of a tread portion that contacts a road surface, when a standard load is applied to the tire.

3. The tire according to claim 1, wherein, as a point a is defined as a position on the surface of the side wall at the maximum width position and a point b is defined as an intersection between a straight line L1 passing the inner side belt and parallel to the tire width direction, and the surface of the side wall, in a state in which the standard load is applied to the tire, the inflection point is an intersection between a straight line L2 passing the point a, and point b and the surface of the side wall.

4. The tire according to any one of claims 1 to 3, wherein the protrusion portion comprises a radial direction outer side portion located at the outer side in the tire radial direction with respect to the inflection point, and a radial direction inner side portion located at the inner side in the tire radial direction with respect to the inflection point, and
wherein the radial direction inner side portion is larger than the radial direction outer side portion.

5. The tire according to any one of claims 1 to 4, wherein a height of the protrusion portion from the surface of the side wall becomes smaller as being far away from the maximum protruded portion in the tire radial direction.

6. The tire according to any one of claim 1 to 5, wherein the protrusion portions are separately arranged in the tire circumferential direction, in a tire side view.
